# EUROPÄISCHE PATENTSCHRIFT

(11) **EP 1 356 572 B1**
(45) Veröffentlichungstag und Bekanntmachung des Hinweises auf die Patenterteilung: **25.11.2009**
(21) Anmeldenummer: 02706597.8
(22) Anmeldetag: 17.01.2002
(51) Int. Cl.: H02K 5/06

(54) **STATOR-GENERATOR-SYSTEM, INSBESONDERE ANTRIEBSANORDNUNG FÜR EIN HYBRIDFAHRZEUG**
STATOR GENERATOR SYSTEM, ESPECIALLY A DRIVE MECHANISM FOR A HYBRID VEHICLE
SYSTEME STATOR/GENERATEUR, EN PARTICULIER DISPOSITIF D'ENTRAINEMENT D'UN VEHICULE HYBRIDE

(30) Priorität: 29.01.2001 DE 10103806
(43) Veröffentlichungstag der Anmeldung: 29.10.2003
(73) Patentinhaber: Continental Automotive GmbH, 30165 Hannover (DE)
(72) Erfinder: DEHRMANN, Uwe, 97076 Würzburg (DE)
(86) Internationale Anmeldenummer: PCT/DE2002/000127
(87) Internationale Veröffentlichungsnummer: WO 2002/061921

(56) Entgegenhaltungen:
- DE-A- 2 432 178
- DE-A- 19 623 460
- DE-A- 19 905 366
- US-A- 1 779 950
- US-A- 3 827 141
- US-A- 5 256 926

## Beschreibung

Die Erfindung bezieht sich auf ein Starter-Generator-System für ein Hybridfahrzeug gemäß Patentanspruch 1.

Bei einem z.B. durch die DE 199 05 366 C2 bekannten Starter-Generator-System ist das Statorpaket offenbar mittels eines axialen Passsitzes an einem Stator-Halter montiert; dazu ist mit fertigungstechnisch hohem Aufwand der Außendurchmesser des Stator-Paketes sowie der Innendurchmesser des Stator-Halters auf einer bestimmten axialen Länge spannend zu bearbeiten. Zur hinreichenden Wärmeabführung erstreckt sich im bekannten Fall der DE 199 05 366 C2 im Stator-Halter ein von einem Fluid durchströmter Kühlkanal.

Zur sicheren Momentenübertragung sind in der Praxis formschlüssig ineinandergreifende Mitnehmernuten bzw. korrespondierende Mitnahmestege an der Umfangsfläche der zusammenzufügenden Bauteile von Stator-Paket und Stator-Halter vorzusehen. Zur allen Belastungen gewachsener axialer Sicherung des Stator-Paketes relativ zum Stator-Halter sind im bekannten Fall nach der Passsitzmontage zwischen Stator-Halter und Stator-Paket gesonderte Haltestege notwendig, die stirnseitig an dem Stator-Paket anliegen und mit dem Stator-Halter fest zu verbinden, z.B. verschrauben, sind.

Durch die DE 196 23 460 A1 ist eine elektrische Maschine mit einem eine Stator-Wicklung aufnehmenden und in einem Stator-Halter fixierbaren Stator-Paket bekannt; das Stator-Paket ist dazu einschließlich der Wickelkopf-Stirnverbindungen der in dessen Nuten eingebrachten Ständerwicklung axial stirnseitig und außenrandseitig in einen im Gießverfahren hergestellten Gehäusekörper mit angegossenem stirnseitigem Zentrierrand und mit angegossenen Aufstellfüßen vollkommen eingebettet.

Durch die US-A-3 827 141 ist ein aus Einzelzähnen und diese außenrandseitig verbindenden Jochbrücken zusammengesetztes Statorpaket vorgesehen, das zum Zusammenhalt einschließlich der zwischen die Einzelzähne eingebrachten Statorwicklung vergossen ist.

Gemäß Aufgabe vorliegender Erfindung soll ohne Nachteil für eine geforderte hinreichende Momentenabstützung und Wärmeabfuhr der Fertigungs- und Montageaufwand für den Starter-Generator einschließlich der Einbringung der Stator-Wicklung in das Stator-Paket und dessen Anbindung an den Stator-Halter wesentlich gemindert werden können.

Die Lösung dieser Aufgabe gelingt erfindungsgemäß durch ein Starter-Generator-System gemäß Patentanspruch 1; vorteilhafte Ausgestaltungen der Erfindung sind jeweils Gegenstand der Unteransprüche.

Durch das erfindungsgemäße Ein- bzw. Umspritzen des Stator-Halters ergibt sich durch das Umspritzen sämtlicher an dem Stator-Halter momentenabstützender Flächen eine gleichmäßigere Kraftverteilung mit dadurch bedingter, insbesondere radial geringerer Bauhöhe, bei gleichzeitig unbehinderter Einbringungsmöglichkeit der Statorwicklung in die Nuten des Stator-Paketes sowie der Anordnung der Stirnverbindungen der in den Nuten liegenden Wicklungsleiter.

Die Erfindung sowie weitere vorteilhafte Ausgestaltungen werden im folgenden anhand schematisch dargestellter Ausführungsbeispiele in der Zeichnung näher erläutert. Darin zeigen:
- FIG 1: in axialer Draufsicht ein erfindungsgemäß in einem Stator-Halter fixiertes Stator-Paket,
- FIG 2: die Anordnung gemäß FIG 1 im Schnittverlauf II-II,
- FIG 3: die Anordnung gemäß FIG 2 mit zusätzlich, in das Sta- tor-Paket eingebrachter Stator-Wicklung,
- FIG 4: eine Ansicht gemäß FIG 3 mit in vorbekannter Weise in einem Stator-Halter fixiertem Stator-Paket.

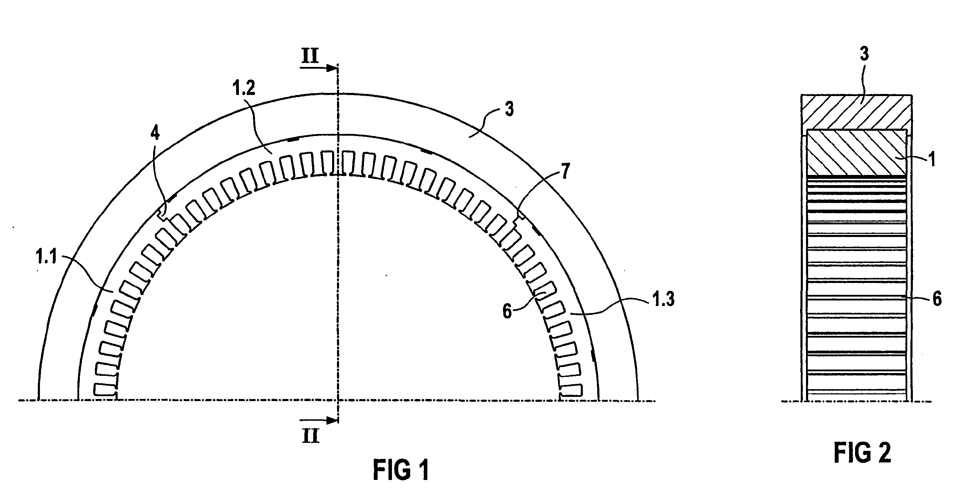

FIG 1 und 2 zeigen in axialer Stirnansicht bzw. im radialen Schnitt die obere Hälfte eines in einem Stator-Halter 3 eingegossenen bzw. eingespritzten noch unbewickelten Stator-Paketes 1; die Umgießung bzw. Umspritzung umfasst die Außenumfangsfläche sowie die außenrandseitigen Stirnflächen des Stator-Paketes 1, derart dass eine von derartigen stirnseitigen Umfassungen 3.1; 3.2 ungehinderte Anordnung der von Nuten 6 des Stator-Paketes 1 aufzunehmenden und durch Stirnverbindungen untereinander verschalteten Wicklungsleitern gewährleistet ist.

Nach einer vorteilhaften Ausgestaltung der Erfindung ist das Stator-Paket 1, insbesondere aufgrund des größeren Durchmessers bei zum Einsatz in Hybrid-Elektrofahrzeugen vorgesehenen Starter-Generatoren, über seinen Umfang aus mehreren, durch Gieß-Einfassung auf einfache und sichere Weise zu einem Verband fügbaren, im Bereich von Trennfugen 7 tangential voreinander liegenden, Paket-Segmenten 1.1; 1.2; 1.3 zusammengesetzt.

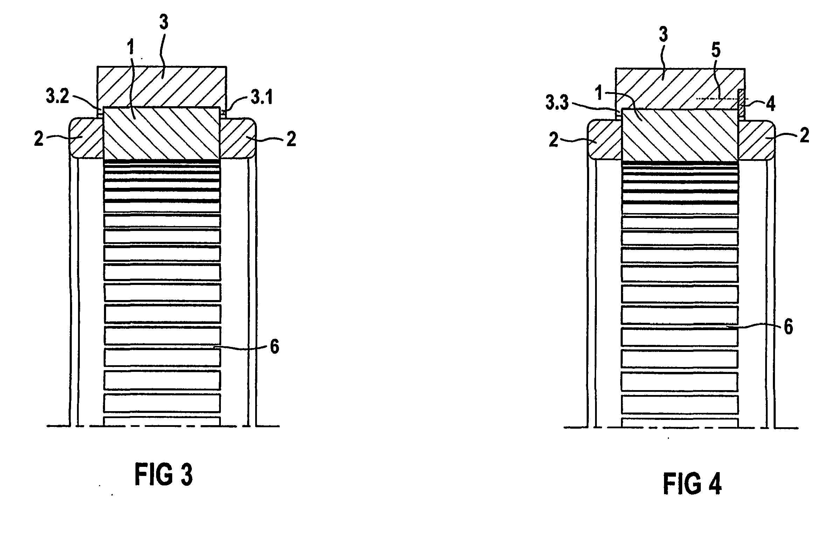

FIG 3 zeigt ausgehend von FIG 2 das Stator-Paket 1 mit einer - durch Wickelkopf-Stirnverbindungen angedeutete - Stator-Wicklung 2 einer Asynchronmaschine.

FIG 4 zeigt eine vorbekannte Anordnung, bei der das Stator-Paket 1 axial in eine Aufnahme des Stator-Halters 3 im Passsitz bis zu einem axialen Anschlag 3.3 eingeschoben und in der anderen axialen Richtung durch einen axial anschließend anzulegenden und z.B. über eine Schraubverbindung 5 am Stator-Paket zu fixierenden Haltesteg 4 zu sichern ist.

## Patentansprüche

1. Starter-Generator-System für ein Hybridfahrzeug,
- mit einem eine Stator-Wicklung (2) aufnehmenden und in einem Stator-Halter (3) fixierbaren Stator-Paket (1),
- mit einer radial außen umfassenden Umspritzung des Stator-Paketes (1) durch den Stator-Halter (3),
- mit einer nur axial stirnseitig und außenrandseitig radial oberhalb der Wickelkopf-Stirnverbindungen der Stator-Wicklung (2)umfassenden Umspritzung des Stator-Paketes (1) durch den Stator-Halter (3).

2. Stator-Generator-System nach Anspruch 1,
- mit einer Zusammensetzung des Stator-Paketes (1) aus mehreren, durch ihre Einspritzung in dem Stator-Halter (3) betriebsmäßig fixierten, Paket-Segmenten (1.1;1.2;1.3).

3. Stator-Generator nach Anspruch 2,
- mit einer Zusammensetzung des Stator-Paketes (1) aus mehreren tangentialen Paket-Segmenten (1.1;1.2;1.3).

4. Stator-Generator-System nach zumindest einem der Ansprüche 1-3,
- mit einer Ausbildung des Stator-Halters (3) als Vollgußteil, insbesondere als Metall-Vollgußteil.

5. Stator-Generator-System nach zumindest einem der Ansprüche 1-4,
- mit einer Ausbildung der von dem Stator-Paket (1) aufgenommenen Stator-Wicklung (2) als Asynchronmaschinen-Wicklung.

## Claims

1. Starter-generator system for a hybrid vehicle,
- having a stator plate pack (1) accommodating a stator winding (2) and fixable in a stator holder (3),
- having a radially externally encompassing insert injection-moulding of the stator plate pack (1) by means of the stator holder (3),
- having an insert injection-moulding of the stator plate pack (1) by means of the stator holder (3) extending only axially on the end face and radially on the outer edge above the winding overhang end connections of the stator winding (2).

2. Stator-generator system according to claim 1,
- having the stator plate pack (1) being composed of a plurality of plate pack segments (1.1;1.2;1.3) fixed in the stator holder (3) for normal operating conditions by means of their injection.

3. Stator-generator according to claim 2,
- having the stator plate pack (1) being composed of a plurality of tangential plate pack segments (1.1;1.2;1.3).

4. Stator-generator system according to at least one of claims 1-3,
- having an embodiment of the stator holder (3) as a solid-cast part, in particular as a metal solid-cast part.

5. Stator-generator system according to at least one of claims 1-4,
- having an embodiment of the stator winding (2) accommodated by the stator plate pack (1) as an asynchronous machine winding.

## Revendications

1. Système stator/générateur pour un véhicule hybride comportant :
- un empilement statorique (1) pouvant être fixé dans une carcasse statorique (3) et recevant un bobinage statorique (2),
- un dispositif obtenu par moulage par injection enserrant radialement à l'extérieur l'empilement statorique (1), le dispositif représentant la carcasse statorique (3),
- un dispositif obtenu par moulage par injection représentant à la carcasse statorique (3) et enserrant l'empilement statorique (1) seulement axialement du côté frontal et sur le bord extérieur radialement au-dessus des liaisons frontales des têtes de bobinage du bobinage statorique (2).

2. Système stator/générateur selon la revendication 1, comportant un assemblage de l'empilement statorique (1) fait d'une pluralité de segments d'empilement (1.1 ; 1.2 ; 1.3) fixés fonctionnellement dans la carcasse statorique (3) par leur moulage par injection.

3. Système stator/générateur selon la revendication 2, comportant un assemblage de l'empilement statorique (1) fait d'une pluralité de segments d'empilement tangentiels (1.1 ; 1.2 ; 1.3).

4. Système stator/générateur selon au moins l'une des revendications 1 à 3, comportant :
- une réalisation de la carcasse statorique (3) sous la forme d'une pièce moulée pleine, en particulier métallique.

5. Système stator/générateur selon au moins l'une des revendications 1 à 4, comportant :
- une réalisation du bobinage statorique (2) monté dans l'empilement statorique (1), sous la forme d'un bobinage de machine asynchrone.
